(19) Europäisches Patentamt

European Patent Office

Office européen des brevets

(11) **EP 1 718 103 B1**

(12) **EUROPEAN PATENT SPECIFICATION**

(45) Date of publication and mention
of the grant of the patent:
**02.12.2009 Bulletin 2009/49**

(21) Application number: **05009446.5**

(22) Date of filing: **29.04.2005**

(51) Int Cl.:
*H04R 3/02* (2006.01)          *G10L 21/02* (2006.01)
*H04M 3/56* (2006.01)

(54) **Compensation of reverberation and feedback**

Kompensation des Echos und der Rückkopplung

Compensation de la révérbération et de la rétroaction

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**02.11.2006 Bulletin 2006/44**

(73) Proprietor: **Harman Becker Automotive Systems
GmbH
76307 Karlsbad (DE)**

(72) Inventors:
• **Christoph, Markus
94315 Straubing (DE)**
• **Haulick, Tim
89143 Blaubeuren (DE)**

• **Schmidt, Gerhard Uwe
89081 Ulm (DE)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 429 315          WO-A-02/32356
WO-A-98/06185          US-A1- 2003 061 032
US-A1- 2004 170 284          US-A1- 2005 047 609
US-B1- 6 389 440**

## Description

### Field of Invention

The present invention relates to a system for audio signal processing with reduced feedback and dereverberation and a method for reducing feedback and dereverberation in microphone signals. The invention, in particular, relates to combined feedback compensation and multi-channel dereverbaration in communication systems installed in vehicles.

### Background of the invention

Verbal communication is often affected by a noisy background. A prominent example is communication of passengers in vehicles. In particular, at high traveling speeds dialogs between back and front passengers are easily disturbed by background noise. If additional audio signals, e.g., from a radio or a CD player, are output during the conversation, the intelligibility of the utterances deteriorates further.

To improve the intelligibility of the passengers' utterances communication system comprising speech processing means have recently been employed in vehicular cabins. Microphones installed near each seat of the cabin can detect speech signals from the passengers. The microphone signals are processed by a speech signal processing means and output by loudspeakers. Speech signals from a back passenger are preferably output by front loudspeakers.

However, it is necessary to reduce acoustic feedback that otherwise can cause, e.g., unpleasant echoes. In the worst case, acoustic feedback can even result in a complete breakdown of communication. Reliable feedback reduction means cannot easily be designed, e.g., since the reverberating characteristics of vehicular cabins are rather complex.

Communication systems installed in vehicles typically also comprise audio devices as, e.g., a radio. If audio signals are output by the loudspeakers, e.g., due to the operation of a radio, the microphones installed in the vehicular cabin detect at least some of the audio signals in addition to the speech signals of the passengers. The detected audio signals have to be sufficiently damped, since otherwise the closed electro-acoustic loop would result in significant reverberation of the audio reproduction.

EP 1 429 315 A1 discloses a method for suppressing echoes and noises by processing an audio signal that comprises speech and noise signals. The acoustic filtering system comprises adaptive filters that are adapted according to a transfer function between each output channel or speaker and each input channel or microphone. Additional time variant filtering is carried out by means of a Wiener filter in order to eliminate echo remains and to reduce noise.

WO 98/06185 A discloses a method for echo cancellation in communication systems including processing of decorrelated signals.

US 2004/0170284 A1 discloses a sound reinforcement system comprising several microphones, a microphone beamformer coupled to the microphones, adaptive echo compensation means coupled to the microphone beamformer for generating an echo compensated microphone signal, and several loudspeakers coupled to the adaptive echo compensation means means. The sound reinforcement system further comprises an adaptive loudspeaker beamformer coupled between the adaptive (11) means and the loudspeakers for shaping the directional pattern of the loudspeakers.

WO 02/32356 A discloses an automatic gain control that includes a microphone for receiving the spoken voice and the ambient noise and for converting the spoken voice and ambient noise into a first audio signal, the first audio signal including a first component corresponding to the spoken voice and a second component corresponding to the ambient noise, a parameter estimation processor for receiving the first audio signal and for determining parameters for deciding whether or not the second component corresponds to an undesirable transient noise, decision logic for deciding, based on the parameters, whether or not the second component corresponds to an undesirable transient signal, a filter for filtering the first audio signal to provide a filtered audio signal.

Adaptive filters have been employed for feedback reduction as well as feedback compensation of audio signals. However, such filters do not work sufficiently reliable, since the automatic adaptation of the filter coefficients suffers from severe correlation problems. Therefore, the adaptive filters do not guarantee the high quality of speech signals that is necessary for an electronically aided verbal communication in vehicular cabins, for example.

Thus, it is an object of the present invention to provide an improved system for audio signal processing and an improved method for feedback reduction in microphone signals, in particular, to facilitate passengers' conversation in vehicular cabins and to avoid reverberation of audio signals from audio devices as, e.g., a radio or a DVD player.

### Description of the invention

The above mentioned object is achieved by the inventive method of claim 1. The herein provided method for processing of audio signals in an audio system comprising at least one microphone and at least one loudspeaker, wherein the audio signals comprise audio signals of a first class, in particular, from a first audio device, and audio signals of a second class, in particular, from a second audio device, comprises the steps of:

decorrelating the audio signals of the first class;

estimating by an adaptive filtering means for each loudspeaker an impulse response between the at least one microphone and the at least one loudspeaker on the basis of the decorrelated audio signal; filtering a microphone signal on the basis of each estimated impulse response and the decorrelated audio signals to obtain a noise compensated signal; estimating feedback components of the audio signals of the second class by means of a feedback-reduction means with filter coefficients determined based on the estimated impulse response; and subtracting the estimated feedback components from the noise compensated signal to obtain an output signal.

The audio system can, for example, represent a communication system in a vehicle usable for electrically supporting verbal communication between speakers, e.g., between passengers in a vehicle, and for concurrently outputting audio signals from an audio device like a radio. The output signal can be further processed before it is eventually output by the at least one loudspeaker. The first audio device can be a radio or a CD player or a DVD player, for example. Audio signals of the second class may comprise signals that represent verbal utterances, in particular, by passenger of a vehicle. The second audio device can be a speech output device outputting processed microphone signals that represent verbal utterances.

The audio signals of the first class are preferably decorrelated by means of non-linear processing means and/or a time-dependent filtering means. Thus the signals are processed by some non-linear mapping, e.g., in form of a halfwave rectification, and/or they are, e.g., filtered by a finite impulse response (FIR) filter with two different sets of filter coefficients that may be switched during a short interpolation phase.

For each loudspeaker channel an impulse response between the microphones and the loudspeaker can be estimated, i.e. the respective automatically adapted filter coefficients of an adaptive filtering means are calculated, as known in the art, in order to enable efficient reduction/compensation of the decorrelated audio signals of the first class of audio signals in the microphone signal that is processed by the adaptive filtering means.

Adaptation of the filter coefficients can, e.g., be achieved by the gradient method employing a suitable cost function as known in the art (see, e.g., Acoustic Echo and Noise Control, by E. Hänsler and G. Schmidt, John Wiley & Sons, New York, 2004; Adaptive Filter Theory, by Haykin, S., Prentice Hill, New Jersey, 2002).

The noise compensated signal represents a filtered microphone signal compensated for noise in the form of the estimated contribution of the audio signals of the first class output by the loudspeakers to the microphone signal. By filtering of the microphone signal subtraction of undesirable perturbations in form of a particular signal from the microphone signal is meant. The particular signal that is subtracted from the microphone signal in order to obtain the noise compensated or error signal is obtained by the sum of the convolution of the estimated impulse response for each loudspeaker channel that is obtained after adaptation of the respective filter coefficients has been completed with the decorrelated audio signal of the respective loudspeaker channel.

The estimated impulse response for each loudspeaker channel is convolved with the respective audio signal of the second class of audio signals and the sum of the results from the convolution procedures is subtracted from the noise compensated signal in order to obtain an output signal. Thus, the output signal $o(n)$ (with $n$ being a discrete time index), i.e. the filtered noise compensated signal, is determined from the microphone signal $d(n)$ for $M$ loudspeakers by

$$o(n) = d(n) - \sum_{i=0}^{M-1} \hat{d}_{e,i}(n) - \sum_{i=0}^{M-1} \hat{d}_{r,i}(n),$$

where $\hat{d}_{e,i}(n)$ is obtained from the convolution of a vector containing the last $N$ signals of the $i$-th loudspeaker channel of a first audio device with the estimated impulse response vector containing the filter coefficients of the adaptive filtering means (convolution procedure) and $\hat{d}_{e,i}(n)$ is obtained from the convolution of a vector containing the last $N$ audio signals of the second class, e.g., output signals of a speech output device, with the same estimated impulse response vector as above.

The inventive method, thus, represents a new combined method for compensation of audio signals of a first class and for reducing feedback of audio signals of a second class utilizing the same filter coefficients. Thereby, a very efficient dereverberation and feedback reduction is achieved, even if audio signals of the first class and of the second class are concurrently processed by the audio system and the processed audio signals are concurrently output by the loudspeakers. Automatic adaptation of the filter coefficients of the filtering means provided to obtain noise compensated signals from the microphone signals on the basis of decorrelated audio signals and to obtain output signals from noise compensated signals on the basis of audio signals from a second class does not suffer significantly from correlation problems.

According to an advantageous embodiment the short-time power of the microphone signal, the noise compensated signal and the output signal are automatically determined and each estimated impulse response, i.e. at least one estimated impulse response, if only one loudspeaker is present, is automatically multiplied with a factor less than one, if the short-time power of the noise compensated signal or of the output signal is higher than the short-time power of the microphone signal.

By this step, stability of the inventive method can be guaranteed. In particular, if the short-time power of the noise compensated signal is higher than the short-time power of the microphone signal, the estimated impulse response can be weighted by a leakage factor $\rho_e$ with $0 < \rho_e < 1$, and if the short-time power of the output signal is higher than the short-time power of the microphone signal the estimated impulse response can also be weighted by a leakage factor $\rho_{\tilde{e}}$ with $0 < \tilde{\rho}_{\tilde{e}} < \rho_e < 1$.

If more than one microphone is present, it may be preferred to beamform the different microphone signals that may be detected by microphone arrays, in order to obtain a beamformed microphone signal with an enhanced signal-to-noise ratio as known in the art. By using multiple microphones, the different spatial characteristics of speech and noise can be exploited and in this way the background noise can be suppressed.

A conventional delay-and-sum-beamformer may be used. Alternatively, an adaptive weighted sum beamformer may be employed that combines the pre-processed, in particular, time aligned signals $a_m$ of $M$ microphones to obtain one output signal $d$ with an improved signal-to-noise ratio $d(n) = \sum_{m=1}^{M} A_m \, a_m(n)$ with weights $A_m$ that are not time-independent, but have to be recalculated repeatedly as is required, e.g., to maintain sensitivity in the desired direction and to minimize sensitivity in the directions of noise sources. Feedback reduction and dereverberation of a beamformed microphone signal instead of a non-beamformed one can further improve the quality of the output signals.

The audio signals of the first class may be transmitted by an audio device, in particular, a radio or a CD player or a DVD player and/or the audio signals of the second class comprise at least one speech signal from a speech output device. This can be the case, e.g. in a communication system installed in a vehicle that allows for electrically aided verbal communication of the passengers and also for the playback of DVDs, CDs and radio programs. Feedback of the verbal inputs by the passengers representing audio signals of the second class can sufficiently be reduced and reverberation of the output audio signals transmitted by one of the above-mentioned audio devices can be avoided.

Embodiments of the inventive method are particularly suitable for a situation, wherein the microphones comprise at least a first set of microphones comprising at least one microphone and a second set of microphones comprising at least one microphone and the loudspeakers comprise at least a first set of loudspeaker located close to the first set of microphones and comprising at least one loudspeaker and a second set of loudspeakers located close to the second set of microphones and comprising at least one loudspeaker, in which case the audio signals of the second class of audio signals can be detected by at least the first set of microphones to obtain the microphone signal to be processed and output as the output signal gained by the two filtering steps described above by at least the second set of loudspeakers.

A method according to this example is of particular use, if the audio signals of the second class are speech signals from a speech output device being part of communication system that, e.g., is installed in a vehicle. Microphones installed close to a back passenger may detect utterances by this passenger and the processed speech signals can be output by loudspeakers installed close to the driver and/or another front passenger. Thereby, the intelligibility of the verbal communication between front and back passengers can significantly be improved.

The above describes processing can be performed in the time domain or in the frequency domain or in subbands.

The invention also provides a computer program comprising one or more computer readable media having computer-executable instructions for performing the above-mentioned steps of embodiments of the inventive method for audio signal processing.

The above mentioned object is also achieved by a system for signal processing of audio signals that comprise audio signals of a first class, in particular, from a first audio device, and audio signals of a second class, in particular, from a second audio device, comprising

at least one microphone to obtain a microphone signal and at least one loudspeaker; a pre-processing means configured to receive and to decorrelate the audio signals of the first class of audio signals; a first signal processing means comprising adapted filter coefficients and configured to estimate for each loudspeaker an impulse response between the at least one microphone and the at least one loudspeaker and to filter the microphone signal based on the decorrelated audio signals to obtain a noise compensated signal; a second signal processing means configured to estimate feedback components of the audio signals of the second class by means of a feedback-reduction means with filter coefficients determined based on the estimated impulse response and a subtractor configured to subtract the estimated feedback components from the noise compensated signal to obtain an output signal.

It may be preferred to use more than one microphone, in particular, more than one microphone array. The first filtering means comprises filter coefficients that are automatically adapted time-dependently to model the finite response between the loudspeakers and the microphones (one finite response for each loudspeaker channel, see description above). The first and the second signal processing means are adaptive filters that may or may not be physically separate units.

The system may further comprise means configured to determine the short-time power of the microphone signal, the noise compensated signal and the output signal and the calculation/adaptation of the filter coefficients of the first signal processing means may comprise multiplication of the filter coefficients with a factor less than one, if the short-time power of the noise compensated signal or of the output signal is higher than the short-time power of the microphone signal.

The pre-processing means may comprise a non-linear processing means, in particular, a halfwave rectifier, and/or a time-dependent filtering means.

According to an embodiment of the inventive system, a beamforming means configured to generate a beamformed microphone signal is further employed.

The pre-processing means and/or the first and/or the second processing means can be configured to perform processing in the time domain or in the frequency domain or in subbands.

Furthermore, the invention provides a communication system, in particular, for use in a vehicular cabin, comprising

a system for signal processing of audio signals according to one of the above described embodiments;

at least one first audio device, in particular, a radio or a CD player or a DVD player, that transmits the audio signals of the first class; and

at least one second audio device, in particular, a speech output device, that transmits the audio signals of the second class.

Embodiments of the inventive system for audio signal processing are particularly useful for communication systems installed in vehicular cabins. Feedback reduction of the verbal inputs by the passengers and dereverberation of, e.g., audio signals from a radio device result in a better quality of audio signal reproduction and intelligibility of verbal utterances.

Additional features and advantages of the invention will be described with reference to the drawings:

Fig. 1 shows a communication system for a vehicular cabin comprising microphones, loudspeakers, a radio and signal processing means.

Fig. 2 illustrates time-dependent filtering of radio signals in order to decorrelate the signals.

Fig. 3 illustrates an example of the inventive system and method for processing audio signals comprising filtering of a microphone signal on the basis of decorrelated audio signals from a first device and speech signals from a second device utilizing the same filter coefficients.

Fig. 4 illustrates an example of the inventive system and method comprising filtering of a beamformed microphone signal on the basis of decorrelated audio signals from a first device and speech signals from a second device utilizing the same filter coefficients and a stability check,

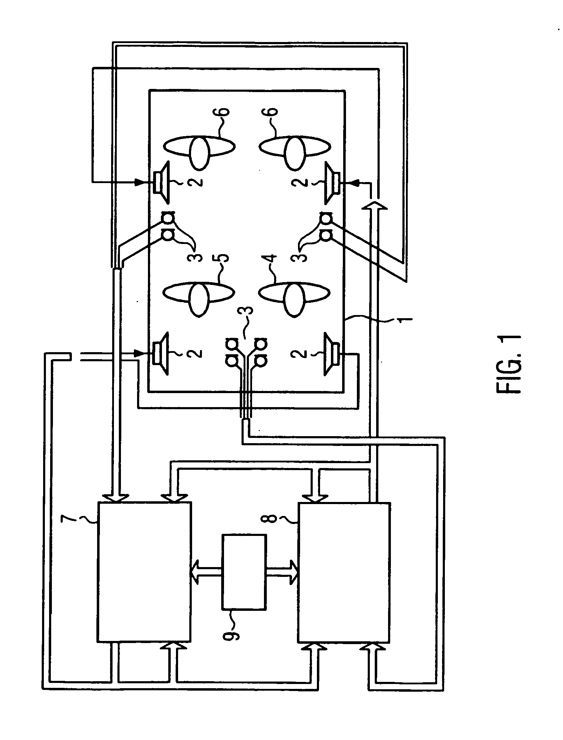

Fig. 1 schematically illustrates an example of a communication system installed in a vehicular cabin 1, comprising loudspeakers 2 and microphones 3 to detect verbal utterances respectively mounted close to a driver 4, a front passenger 5 and back passengers 6. The communication system also comprises an audio device 9, which according to this example is a radio.

If a back passenger 6 is in dialog with the front passenger 5 the conversation is aided by the communication system by detecting the passengers' utterances by means of the microphones 3 close to the passengers 5 or 6 respectively, signal processing the microphone signals and outputting the processed signals to the loudspeakers close to the passengers 4 or 5 respectively.

A signal processing means is logically and physically divided into a means 7 processing signals detected by the backward microphones and a means 8 processing the signals detected by the front microphones. Alternatively, the signal processing means can be formed as one single physical device. Both means 7 and 8 are also connected with the radio 9 and thus output of both the processed speech signals and audio signals from the radio (radio signals) is provided by the means 7 and 8. Processed speech signals and audio signals from the radio are output concurrently by the loudspeakers 2. Additional audio sources, e.g., a CD or a DVD player may be present and represented by the reference number 9 and CDs or DVDs may be played-back via the means 7 and 8.

According to the present invention, radio signals output by the loudspeakers 2 are efficiently compensated, i.e. damped after they have been received by the microphones 3 and input in the means 7 and 8. Feedback of speech signals output by at least one of the loudspeakers 2 and input in the means 7 and/or 8 via microphones 3 is efficiently reduced.

Compensation of the radio signals, i.e. dereverberation, and feedback reduction are performed by means of adaptive filters comprising sets of filter coefficients for each of the loudspeakers 2.

For example, the microphones 3 detect radio signals output by the loudspeakers 2. These detected signals are beamformed as known in the art to obtain a beamformed signal $d(n)$ ($n$ denotes the discrete time index). For the shown four loudspeakers 2 compensation could, in principle, be carried out by the subtraction

$$e(n) = d(n) - \sum_{i=1}^{4} \sum_{k=0}^{N-1} \hat{h}_{i,k}(n) \tilde{x}_i(n-k),$$

where N is the filter length, i.e. the number of coefficients, e.g., some hundred, $\hat{h}_{i,k}(n)$ that constitute the estimated impulse responses $\hat{\mathbf{h}}_i(n)$. The estimated impulse responses $\hat{\mathbf{h}}_i(n)$ models the real impulse responses $\mathbf{h}_i(n)$ of the system of the loudspeakers 2, the microphones 3 and the vehicular cabin 1. By $\tilde{x}_i(n)$ the radio signals of four channels according to the four loudspeakers are denoted. The finite difference $e(n)$ is usually called error signal.

However, since several kinds of radio signals show strong correlations, in particular, in terms of cross correlation or coherence, numerical algorithms used for the adaptation of the filter coefficients do not necessarily converge to the desired impulse responses of the entire loudspeaker-room-microphone-system. This problem is well-known in the art and mathematically speaking it is caused by the non-uniqueness of the optimization problem to be solved for adaptation of the filters.

Decorrelation of the signals $\tilde{x}_i(n)$ can be achieved by some non-linear mapping (see, e.g., Investigation of Several Types of Nonlinearities for Use in Stereo Acoustic Echo Cancellation, by Morgan, D.R., Hall, J.L. and Benesty, J., IEEE Transactions on Speech and Audio Processing, Vol. 9, No. 6, p.686, 2001) e.g., half wave rectification, for each channel $i$:

$$x(n) = \begin{cases} (1+a)\tilde{x}(n), & \text{if } \tilde{x}(n) > 0, \\ \tilde{x}(n), & \text{else.} \end{cases}$$

Increasing the parameter a results in faster convergence but also in a higher distortion factor (ripple-factor). Typically, a is chosen between 0.3 and 0.7.

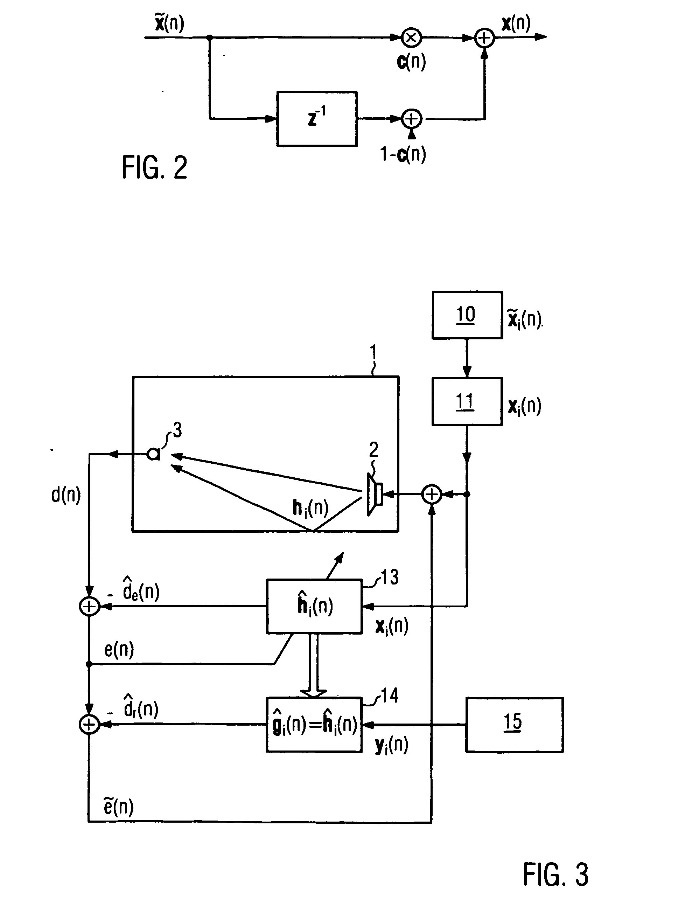

Alternatively, the radio signals can be filtered by a time-dependent filter before being output by the loudspeakers 2 (see, *e.g.,* A Stereo Echo Canceller with Correct Echo-Path Identification Based on Input-Sliding Technique, by Sugiyama, A., Joncour, Y and Hirano, A., IEEE Transactions on Signal Processing, Vol. 49, No. 1, p. 2577, 2001). A finite impulse response filter with two coefficients $c(n)$ and $1 - c(n)$ for each discrete time index $n$ may be used. Signals are passed without delay for some period, the coefficients being *1* and *0*, and then delay by one clock is realized by switching the coefficients to *0* and *1* (see Fig. 2). The switching process is preferably carried out during a short interpolation phase rather than abruptly. Moreover, time-dependent filters may be employed that only result in phase variations. Combinations of non-linear processing and time-dependent filtering are possible.

It should be noted that the real system identification achieved by the decorrelation is necessary to use the estimated impulse response to subsequently reduce feedback (s. below). Thus, instead of $\tilde{x}_i(n)$ the decorrelated signals audio signals $x_i(n)$ are used to adapt the filter coefficients and to obtain the error signal $e(n)$.

Further steps of the inventive method are explained with reference to Fig. 3 that illustrates a method and a system for signal processing that can be realized in the communication system shown in Fig. 1. As mentioned above radio signals $\tilde{x}_i(n)$ from a radio 10 (or signals from any other audio device, e.g., a DVD player) are pre-processed by a non-linear pre-processing means or a time-dependent filtering means 11 as mentioned above to obtain decorrelated signals $x_i(n)$ to be output by the loudspeaker 2. The signals output by the loudspeaker 2 are detected by the microphone 3 according to some real impulse response $\mathbf{h}_i(n)$. The index $i$ enumerates the loudspeakers or loudspeaker channels of the radio 10 respectively. Whereas, for simplicity, in this example only one microphone 3 and one loudspeaker 2 are shown, in the following equations the index $i$ is still used to facilitate the understanding for the more general case of multiple loudspeakers.

The microphone signal $d(n)$ is processed by an adaptive (radio compensation) filtering means 13 to obtain an error signal

$$e(n) = d(n) - \sum_{i=0}^{M-1} \hat{d}_{e,i}(n) \quad \text{with} \quad \hat{d}_{e,i}(n) = \hat{\mathbf{h}}^{T}_{i}(n)\, \mathbf{x}_{i}(n),$$

where

$$\hat{\mathbf{h}}_{i}(n) = \left[\hat{h}_{i,0}(n), \hat{h}_{i,1}(n), .. \hat{h}_{i,N-1}(n)\right]^{T}$$

denotes the estimated impulse response of the $i$-th channel and

$$\mathbf{x}_{i}(n) = \left[x_{i}(n), x_{i}(n-1), .. x_{i}(n-N+1)\right]^{T}$$

is the vector of the last $N$ signals from the radio (the upper index T denotes the transposition operation). The estimated impulse response, which is only one single response, i.e. $i=M=1$, since only one loudspeaker (channel) is considered in this example, is corrected in direction of the negative gradient of an appropriately chosen cost function J(e(n)):

$$\hat{\mathbf{h}}_{i}(n+1) = \hat{\mathbf{h}}_{i}(n) - m_{i}(n)\nabla_{\mathbf{h}} J(e(n)).$$

Adaptation can be realized using a normalized least mean square method or a recursive least square algorithm (for detail see, e.g., Adaptive Filter Theory, by Haykin, S., Prentice Hill, New Jersey, 2002). In the simplest case the cost function is given by $J(e(n))=E\{e^2(n)\}$ with $E$ being the expectation value.

After the impulse response $\hat{\mathbf{h}}_i(n)$ between the loudspeaker 2 and the microphones 3 has been estimated, the feedback components of an audio signal from a second audio device 15 can also be estimated using the same estimated impulse response used for the compensation of the radio signals by the means 13, i.e. a feedback reduction means 14 with filter coefficients $\hat{\mathbf{g}}_i(n) = \hat{\mathbf{h}}_i(n)$ calculates

$$\hat{d}_{r,i}(n) = \hat{\mathbf{h}}_i^{T}(n)\, \mathbf{y}_i(n),$$

from the vector $\mathbf{y}_i(n)$ that contains the last $N$ output signals of the second audio device, e.g., a speech output device, that is part of the communication system shown in Fig. 1. Thus, the error signal $e(n)$ is further enhanced by subtracting the feedback components coming from the output signal from the speech output device $\mathbf{y}_i(n)$:

$$\widetilde{e}(n) = e(n) - \sum_{i=1}^{M-1} \hat{d}_{r,i}(n).$$

Whereas the radio signals $\mathbf{x}_i(n)$ are usually output by all of the loudspeakers, the output signals of the communication system $\mathbf{y}_i(n)$ are usually output by the loudspeaker(s) close to the listening communication partner only. The respective output signals of the communication system $\mathbf{y}_i(n)$ of the other channels are set to null.

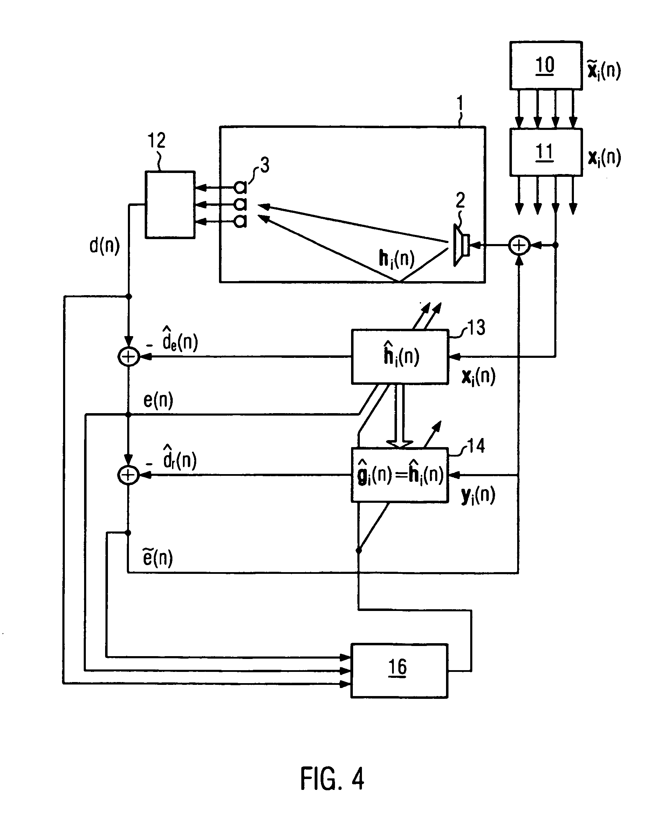

Fig. 4 illustrates a generalized example for the herein disclosed method and system. Microphone signals are obtained by three microphones 3 and they are pre-processed by a beamforming means 12 that combines the microphone signals to one beamformed signal $d(n)$ with an enhanced signal-to-noise ratio that is further processed by an adaptive (radio compensation) filtering means 13 to obtain an error signal $e(n)$. In this example the single loudspeaker 2 represents an arbitrary number of loudspeaker, i.e. $M > 1$. Processing involves similar steps as described above with $i = 1, .., M$.

However, according to the present example the stability of the adaptation of the filter coefficients is checked 16. For this, the short time powers $p_d(n)$, $p_e(n)$ and $p_{\widetilde{e}}(n)$ of the signals $d(n)$, $e(n)$ and $\widetilde{e}(n)$, respectively, are calculated and, for example, recursively filtering of the squares of the respective signals is performed by

$$p_d(n) = \lambda\, p_d(n-1) + (1-\lambda)\, d^2(n)$$

$$p_e(n) = \lambda\, p_e(n-1) + (1-\lambda)\, e^2(n)$$

$$p_{\tilde{e}}(n) = \lambda\, p_{\tilde{e}}(n-1) + (1-\lambda)\, \tilde{e}^2(n)$$

where the time constant $\lambda$ is chosen to be between 0.95 and 0.999. Check for stability is performed by two steps. First, $p_d(n)$ and $p_e(n)$ are compared with each other. If the short time power of the error signal is slightly higher than the one of the beamformed microphone signal, say $p_e(n) > K\, p_d(n)$ with the constant $K$ to be chosen between 1 dB and 3 dB, the estimated impulse response is weighted by a factor $\rho e$ (leakage factor) with $0 < \rho e < 1$.

Second, $p_{\tilde{e}}(n)$ and $p_d(n)$ are compared and if $p_{\tilde{e}}(n) > K\, p_d(n)$, the estimated impulse response is also weighted by a factor $\rho_{\tilde{e}}$ with $0 < \rho_{\tilde{e}} < \rho_e < 1$. The weighting of the estimated impulse response results in a sufficient damping of the estimated impulse response within a few sample rates in the case that an instability is excited.

Whereas above the processing of audio signals is described in the time domain as indicated by the discrete time index n, processing of the digitized and Fourier transformed microphone signal or beamformed microphone signal respectively in the frequency domain may be preferred.

The previously discussed examples are not intended as limitations but serve as examples illustrating features and advantages of the invention. It is to be understood that some or all of the above described features can also be combined in different ways.

## Claims

1. Method for processing of audio signals in an audio system comprising at least one microphone and at least one loudspeaker, wherein the audio signals comprise audio signals of a first class, in particular, from a first audio device, and audio signals of a second class, in particular, from a second audio device, comprising the steps of:

   decorrelating the audio signals ($\tilde{x}_i$) of the first class;
   estimating by an adaptive filtering means (13) for each loudspeaker an impulse response ($\mathbf{h}_i$) between the at least one microphone and the at least one loudspeaker on the basis of the decorrelated audio signals ($x_i$) ;
   filtering a microphone signal ($d$) on the basis of each estimated impulse response ($\hat{\mathbf{h}}_i$) and the decorrelated audio signals ($x_i$) to obtain a noise compensated signal (e);
   estimating feedback components ($\hat{d}_r$) of the audio signals ($\mathbf{y}_i$) of the second class by means of a feedback-reduction means (14) with filter coefficients determined based on the estimated impulse response ($\hat{\mathbf{h}}_i$); and
   subtracting the estimated feedback components ($\hat{d}_r$) from the noise compensated signal (e) to obtain an output signal ($\tilde{e}$).

2. Method according to claim 1, further comprising
   determining the short-time power of the microphone signal, the noise compensated signal and the output signal; and multiplying each estimated impulse response with a factor less than one, if the short-time power of the noise compensated signal or of the output signal is higher than the short-time power of the microphone signal.

3. Method according to claim 1 or 2, wherein decorrelating of the audio signals of the first class comprises non-linear processing and/or time-dependent filtering.

4. Method according to one of the above claims, wherein the microphone signal is obtained as a beamformed microphone signal by beamforming microphone signals from multiple microphones.

5. Method according to one of the above claims, wherein,
   when the microphones comprise at least a first set of microphones comprising at least one microphone and a second set of microphones comprising at least one microphone and the loudspeakers comprise at least a first set of loudspeaker located close to the first set of microphones and comprising at least one loudspeaker and a second set of loudspeakers located close to the second set of microphones and comprising at least one loudspeaker, the audio signals of the second class of audio signals are detected by at least the first set of microphones and the output signal is output by at least the second set of loudspeakers.

6. Computer program product, comprising one or more computer readable media having computer-executable instructions for performing the steps of the method according to one of the Claims 1 - 5.

7. System for signal processing of audio signals that comprise audio signals of a first class, in particular, from a first audio device (10), and audio signals of a second class, in particular, from a second audio device (15), comprising at least one microphone (3) to obtain a microphone signal and at least one loudspeaker (2);

a pre-processing means (11) configured to receive and to decorrelate the audio signals of the first class of audio signals;

a first signal processing means (13) comprising adapted filter coefficients and configured to estimate for each loudspeaker an impulse response between the at least one microphone and the at least one loudspeaker and to filter the microphone signal based on the decorrelated audio signals to obtain a noise compensated signal;

a second signal processing means (14) configured to estimate feedback components ($\hat{d}_r$) of the audio signals of the second class by means of a feedback-reduction means (14) with filter coefficients determined based on the estimated impulse response

and

a subtractor configured to subtract the estimated feedback components ($\hat{d}_r$) from the noise compensated signal ($e$) to obtain an output signal ($\tilde{e}$).

8. System according to claim 7, further comprising

means configured to determine the short-time power of the microphone signal, the noise compensated signal and the output signal; and

wherein the calculation of the filter coefficients of the first signal processing means comprises multiplication of the filter coefficients with a factor less than one, if the short-time power of the noise compensated signal or of the output signal exceeds the short-time power of the microphone signal.

9. System according to one of the claims 7 or 8, wherein the pre-processing means comprises a non-linear processing means and/or a time-dependent filtering means.

10. System according to one of the claims 7 - 9, further comprising a beamforming means configured to generate a beamformed microphone signal.

11. System according to one of the claims 7 - 10, wherein pre-processing means and/or the first and/or the second processing means are configured to perform processing in the time domain or in the frequency domain or in the subbands.

12. Communication system, in particular, for use in a vehicular cabin, comprising

system according to one of the claims 7 - 11;

at least one first audio device, in particular, a radio or a CD player or a DVD player, that transmits the audio signals of the first class; and

at least one second audio device, in particular, a speech output device, that transmits the audio signals of the second class.

**Patentansprüche**

1. Verfahren zum Verarbeiten von Audiosignalen in einem Audiosystem, das zumindest ein Mikrofon und zumindest einen Lautsprecher umfasst, in dem die Audiosignale Audiosignale einer ersten Klasse, insbesondere von einer ersten Audioeinrichtung, und Audiosignale einer zweiten Klasse, insbesondere von einer zweiten Audioeinrichtung, umfassen, das die Schritte umfasst:

Dekorrelieren der Audiosignale ($\tilde{x}_i$) der ersten Klasse;
Schätzen einer Impulsantwort ($\mathbf{h}_i$) für jeden Lautsprecher zwischen dem zumindest einen Mikrofon und dem zumindest einen Lautsprecher mithilfe einer adaptiven Filtereinrichtung (13) auf der Grundlage der dekorrelierten Audiosignale ($x_i$);

Filtern eines Mikrofonsignals (d) auf der Grundlage jeder geschätzten Impulsantwort ($\hat{h}_i$) und der dekorrelierten Audiosignale ($\mathbf{x}_i$), um ein geräuschkompensiertes Signal (e) zu erhalten;

Schätzen von Feedback-Komponenten ($\hat{d}_r$) der Audiosignale ($\mathbf{y}_i$) der zweiten Klasse mithilfe einer Feedback-Reduktionseinrichtung (14) mit Filterkoeffizienten, die auf der Grundlage der geschätzten Impulsantwort ($\hat{h}_i$) bestimmt werden; und

Subtrahieren der geschätzten Feedback-Komponenten ($\hat{d}_r$) von dem geräuschkompensierten Signal (e), um ein Ausgabesignal ($\tilde{e}$) zu erhalten.

2. Verfahren gemäß Anspruch 1, das weiterhin umfasst

Bestimmen der Kurzzeitleistung des Mikrofonsignals, des geräuschkompensierten Signals und des Ausgangssignals; und

Multiplizieren jeder geschätzten Impulsantwort mit einem Faktor kleiner als Eins, wenn die Kurzzeitleistung des geräuschkompensierten Signals oder des Ausgangssignals größer als die Kurzzeitleistung des Mikrofonsignals ist.

3. Verfahren gemäß Anspruch 1 oder 2, in dem das Dekorrelieren der Audiosignale der ersten Klasse nichtlineares Verarbeiten und/oder zeitabhängiges Filtern umfasst.

4. Verfahren gemäß einem der vorhergehenden Ansprüche, in dem das Mikrofonsignal als ein gebeamformtes Mikrofonsignal durch Beamformen von Mikrofonsignalen von mehreren Mikrofonen erhalten wird.

5. Verfahren gemäß einem der vorhergehenden Ansprüche, in dem

wenn die Mikrofone zumindest einen ersten Satz von Mikrofonen, der zumindest ein Mikrofon umfasst, und einen zweiten Satz von Mikrofonen, der zumindest ein Mikrofon umfasst, umfassen und die Lautsprecher zumindest einen Satz von Lautsprechern nahe dem ersten Satz von Mikrofonen, der zumindest einen Lautsprecher umfasst, und einen zweiten Satz von Lautsprechern nahe dem zweiten Satz von Mikrofonen, der zumindest einen Lautsprecher umfasst, umfassen,

die Audiosignale der zweiten Klasse von Audiosignalen von zumindest dem ersten Satz von Mikrofonen detektiert werden und das Ausgangssignal zumindest von dem zweiten Satz von Lautsprechern ausgegeben wird.

6. Computerprogrammprodukt, das ein oder mehrere computerlesbare Medien umfasst, die computerausführbare Anweisungen zum Ausführen der Schritte des Verfahrens gemäß einem der Ansprüche 1 - 5 aufweisen.

7. System zur Signalverarbeitung von Audiosignalen, die Audiosignale einer ersten Klasse, insbesondere von einer ersten Audioeinrichtung (10), und Audiosignale einer zweiten Klasse, insbesondere von einer zweiten Audioeinrichtung (15), umfassen, das umfasst:

zumindest ein Mikrofon (3), um ein Mikrofonsignal zu erhalten, und zumindest einen Lautsprecher (2);

eine Vorverarbeitungseinrichtung (11), die dazu ausgebildet ist, die Audiosignale der ersten Klasse von Audiosignalen zu empfangen und zu dekorrelieren;

eine erste Signalverarbeitungseinrichtung (13), die adaptierte Filterkoeffizienten umfasst, und die dazu ausgebildet ist, für jeden Lautsprecher eine Impulsantwort zwischen dem zumindest einen Mikrofon und dem zumindest einen Lautsprecher zu schätzen und das Mikrofonsignal auf der Grundlage der dekorrelierten Audiosignale zu filtern, um ein geräuschkompensiertes Signal zu erhalten;

eine zweite Signalverarbeitungseinrichtung (14), die dazu ausgebildet ist, Feedback-Komponenten ($\hat{d}_r$) der Audiosignale der zweiten Klasse mithilfe einer Feedback-Reduktionseinrichtung (14) mit Filterkoeffizienten, die auf der Grundlage der geschätzten Impulsantwort bestimmt werden, zu schätzen

und

eine Subtrahiereinrichtung, die dazu ausgebildet ist, die geschätzten Feedback-Komponenten ($\hat{d}_r$) von dem geräuschkompensierten Signal (e) zu subtrahieren, um ein Ausgangssignal ($\tilde{e}$) zu erhalten.

8. System gemäß Anspruch 7, das weiterhin umfasst

eine Einrichtung, die dazu ausgebildet ist, die Kurzzeitleistung des Mikrofonsignals, des geräuschkompensierten Signals und des Ausgangssignals zu bestimmen; und

in dem die Berechnung der Filterkoeffizienten der ersten Signalverarbeitungseinrichtung die Multiplikation der Filterkoeffizienten mit einem Faktor kleiner als Eins umfasst, wenn die Kurzzeitleistung des geräuschkompensierten Signals oder des Ausgangssignals die Kurzzeitleistung des Mikrofonsignals übersteigt.

9. System gemäß einem der Ansprüche 7 oder 8, in dem die Vorverarbeitungseinrichtung eine Einrichtung zur nichtlinearen Verarbeitung und/oder eine Einrichtung zur zeitabhängigen Filterung umfasst.

10. System gemäß einem der Ansprüche 7 - 9, das weiterhin eine Beamforming - Einrichtung umfasst, die dazu ausgebildet ist, ein gebeamformtes Mikrofonsignal zu erzeugen.

11. System gemäß einem der Ansprüche 7 - 10, in dem die Vorverarbeitungseinrichtung und/oder die erste und/oder die zweite Verarbeitungseinrichtung dazu ausgebildet sind, eine Verarbeitung im Zeitbereich oder im Frequenzbereich oder in den Teilbändern auszuführen.

12. Kommunikationssystem, insbesondere für die Nutzung in einer Fahrzeugkabine, das umfasst
System gemäß einem der Ansprüche 7 - 11;
zumindest eine erste Audioeinrichtung, insbesondere ein Radio oder ein CD - Spieler oder ein DVD - Spieler, die die Audiosignale der ersten Klasse übermittelt; und
zumindest eine zweite Audioeinrichtung, insbesondere eine Sprachausgabeeinrichtung, die die Audiosignale der zweiten Klasse übermittelt.

**Revendications**

1. Méthode de traitement de signals audio dans un système audio comprenant au moins un microphone et au moins un haut-parleur, dans lequel les signaux audio comprennent des signaux audio d'une première classe, en particulier, d'un premier dispositif audio, et des signaux audio d'une deuxième classe, en particulier, d'un deuxième dispositif audio, comprenant les étapes suivantes :

   décorrélation des signaux audio ($\widetilde{x}_i$) de la première classe ;
   estimation par un moyen de filtrage adapté (13) pour chaque haut-parleur d'une réponse d'impulsion ($h_i$) entre le, au moins un, microphone et le, au moins un, haut-parleur sur la base des signaux audio décorrélés ($x_i$) ;
   filtrage d'un signal de microphone ($d$) sur la base de chaque réponse d'impulsion estimée ($\hat{h}_i$) et les signaux audio décorrélés ($x_i$) pour obtenir un signal compensé en bruit ($e$) ;
   estimation de composants feedback ($\hat{d}_r$) des signaux audio ($y_i$) de la deuxième classe à l'aide d'un moyen de réduction feedback (14) avec des coefficients de filtre déterminés basés sur l'réponse d'impulsion estimée ($\hat{h}_i$) ; et
   soustraction des composants feedback estimés ($\hat{d}_r$) du signal compensé en bruit ($e$) pour obtenir un signal de sortie ($\widetilde{e}$).

2. Méthode selon la revendication 1, comprenant de plus
la détermination de la puissance à court terme du signal de microphone, du signal compensé en bruit et du signal de sortie ; et
la multiplication de chaque réponse d'impulsion estimée avec un facteur plus petit que un, si la puissance à court terme du signal compensé en bruit ou du signal de sortie est plus grande que la puissance à court terme du signal de microphone.

3. Méthode selon les revendications 1 ou 2, dans laquelle la décorrélation des signaux audio de la première classe comprend un traitement non linéaire et/ou un filtrage en fonction du temps.

4. Méthode selon l'une des revendications précédentes, dans laquelle le signal de microphone est obtenu comme un signal de microphone formé par faisceau par formation de faisceau de signaux de microphone issus de microphones multiples.

5. Méthode selon l'une des revendications précédentes, dans laquelle
lorsque les microphones comprennent au moins un premier ensemble de microphones comprenant au moins un microphone et un deuxième ensemble de microphones comprenant au moins un microphone et lorsque les haut-parleurs comprennent au moins un premier ensemble de haut-parleur localisé près du premier ensemble de microphones et comprenant au moins un haut-parleur et un deuxième ensemble de haut-parleurs localisé près du deuxième ensemble de microphones et comprenant au moins un haut-parleur,
les signaux audio de la deuxième classe de signaux audio sont détectés au moins par le premier ensemble de microphones et le signal de sortie est sorti au moins par le deuxième ensemble de haut-parleurs.

**6.** Produit de programme d'ordinateur, comprenant un ou plusieurs média lisible par ordinateur comportant des instructions exécutables par ordinateur pour réaliser les étapes de la méthode selon l'une des revendications 1-5.

**7.** Système pour le traitement de signal de signaux audio qui comprend des signaux audio d'une première classe, en particulier, d'un premier dispositif audio (10) et de signaux audio d'une deuxième classe, en particulier, d'un deuxième dispositif audio (15) comprenant
au moins un microphone (3) pour obtenir un signal de microphone et au moins un haut-parleur (2) ;
un moyen de prétraitement (11) configuré pour recevoir et pour décorréler les signaux audio de la première classe de signaux audio ;
un premier moyen de traitement de signal (13) comprenant des coefficients de filtrage adaptés et configuré pour estimer pour chaque haut-parleur une réponse d'impulsion entre le, au moins un, microphone et le, au moins un, haut-parleur et pour filtrer le signal de microphone basé sur les signaux audio décorrélés pour obtenir un signal compensé en bruit ;
un deuxième moyen de traitement de signal (14) configuré pour estimer des composants feedback ($\hat{d}_r$) des signaux audio de la deuxième classe à l'aide d'un moyen de réduction feedback (14) avec des coefficients de filtrage déterminés basé sur laréponse d'impulsion
et
un soustracteur configuré pour soustraire les composants feedback estimés ($\hat{d}_r$) du signal compensé en bruit (*e*) afin d'obtenir un signal de sortie ($\tilde{e}$).

**8.** Système selon la revendication 7, comprenant de plus,
un moyen configuré pour déterminer la puissance à court terme du signal de microphone, du signal compensé en bruit et du signal de sortie ; et
dans laquelle le calcul des coefficients de filtrage du premier moyen de traitement de signal comprend la multiplication des coefficients de filtrage avec un facteur plus petit qu'un, si la puissance à court terme du signal compensé en bruit ou du signal de sortie excède la puissance à court terme du signal de microphone.

**9.** Système selon une des revendications 7 ou 8, dans lequel le moyen de prétraitement comprend un moyen de traitement non-linéaire et/ou un moyen de filtrage en fonction du temps.

**10.** Système selon une des revendications 7 - 9, comprenant de plus un moyen formation par faisceau configuré pour générer un signal de microphone formé par faisceau.

**11.** Système selon une des revendications 7 - 10, dans lequel le moyen de prétraitement et/ou le premier et/ou le deuxième moyen de traitement sont configurés pour réaliser un traitement dans le domaine temporel ou dans le domaine de fréquence ou dans les sous-bandes.

**12.** Système de communication, en particulier pour l'usage dans une cabine véhiculaire, comprenant
un système selon l'une des revendications 7 - 11 ;
au moins un premier dispositif audio, en particulier une radio ou un lecteur CD ou un lecteur DVD qui transmets les signaux audio de la première classe ; et
au moins un deuxième dispositif audio, en particulier un dispositif de sortie de voix, qui transmet les signaux audio de la deuxième classe.

FIG. 1

EP 1 718 103 B1

$\widetilde{\mathbf{x}}(n)$

$\mathbf{x}(n)$

$\mathbf{c}(n)$

$\mathbf{z}^{-1}$

$1-\mathbf{c}(n)$

# FIG. 2

10   $\widetilde{\mathbf{x}}_i(n)$

11   $\mathbf{x}_i(n)$

1

3

2

$\mathbf{h}_i(n)$

$d(n)$

$-\hat{d}_e(n)$

13

$\hat{\mathbf{h}}_i(n)$

$\mathbf{x}_i(n)$

$e(n)$

$-\hat{d}_r(n)$

14

$\hat{\mathbf{g}}_i(n)=\hat{\mathbf{h}}_i(n)$

$\mathbf{y}_i(n)$

15

$\widetilde{e}(n)$

# FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1429315 A1
- WO 9806185 A
- US 20040170284 A1
- WO 0232356 A

**Non-patent literature cited in the description**

- **E. HÄNSLER ; G. SCHMIDT.** Acoustic Echo and Noise Control. John Wiley & Sons, 2004
- **HAYKIN, S.** Adaptive Filter Theory. Prentice Hill, 2002
- **MORGAN, D.R. ; HALL, J.L. ; BENESTY, J.** Investigation of Several Types of Nonlinearities for Use in Stereo Acoustic Echo Cancellation. *IEEE Transactions on Speech and Audio Processing,* 2001, vol. 9 (6), 686
- **SUGIYAMA, A. ; JONCOUR, Y ; HIRANO, A.** A Stereo Echo Canceller with Correct Echo-Path Identification Based on Input-Sliding Technique. *IEEE Transactions on Signal Processing,* 2001, vol. 49 (1), 2577